# EUROPÄISCHE PATENTANMELDUNG

(11) **EP 1 284 227 A1**
(43) Veröffentlichungstag der Anmeldung: **19.02.2003**
(21) Anmeldenummer: 02016601.3
(22) Anmeldetag: 25.07.2002
(51) Int. Cl.: B65G 15/10, B65G 15/42

(54) **Riemen**

(30) Priorität: 16.08.2001 DE 10140136
(71) Anmelder: Preh-Werke GmbH & Co. KG, 97616 Bad Neustadt a.d. Saale (DE)
(72) Erfinder: Bardroff, Hans, 97618 Hohenroth (DE)
(74) Vertreter: Dietrich, Barbara

(57) **Zusammenfassung**

Bekannte Förderriemen sind starr gehalten, damit sie den Transport von Werkstückträgern (22) realisieren können, die auf diesen Riemen aufliegen. Nachteilig ist, daß diese Riemen einen relativ großen Umschlingungswinkel besitzen und dadurch die Riemenscheiben bzw. Rollen einen großen Durchmesser aufweisen.

Hiergegen sieht die vorliegende Lösung vor, einen derartigen Riemen (1, 10) zu profilieren, d.h., an der Oberfläche des Riemens am Umfang verteilt ein Profil, beispielsweise durch Materialentnahme, einzubringen, was vorzugsweise durch einen gleichmäßigen Abtrag erfolgt.

## Beschreibung

Die Erfindung betrifft einen Riemen insbesondere in einer Fördereinrichtung.

Aus der DE 197 06 365 C1 sind Förderriemen einer Fördereinrichtung für Werkstückträger einer Fertigungseinrichtung bekannt, die von Riemenscheiben angetrieben werden. Die Förderriemen sind bekanntlich sehr starr gehalten, damit sie den Transport der Werkstückträger realisieren können, die auf diesen Riemen aufliegen. Nachteilig ist, daß diese Riemen einen relativ großen Umschlingungswinkel besitzen und dadurch die Riemenscheiben einen großen Durchmesser aufweisen.

Hieraus bildet sich die Aufgabe der Erfindung, die darin besteht, einen Riemen aufzuzeigen, der diesen Nachteil behebt.

Gelöst wird die Aufgabe durch die Merkmale des Patentanspruchs 1.

Der Erfindung liegt die Idee zugrunde, einen derartigen Riemen zu profilieren. D.h., an der Oberfläche des Riemens wird ein Profil, beispielsweise durch Materialentnahme, eingebracht, was vorzugsweise durch einen gleichmäßigen Abtrag erfolgt.

Dabei sind gleichläufige als auch gegenläufige Profile möglich.

Der Vorteil derart gestalteter profilierter Riemen liegt darin, daß ein Lenken und Ziehen mit diesen Riemen gegenüber herkömmlichen Riemen länger möglich ist. Zudem können kleinere Rollen (Umlenkrollen) und Riemenscheiben (Riemenantrieb) verwendet und unterschiedliche sowie kleinere Umschlingungswinkel realisiert werden.

Anhand eines Ausführungsbeispieles soll die Erfindung näher erläutert werden.

Es zeigt
- Figur 1: einen Riemen mit einer gleichläufigen Profilierung,
- Figur 2: den Riemen mit einer gegenläufige Profilierung,
- Figur 3: skizzenhafte Darstellung der Verwendung der Riemen aus Figur 1 und 2 an einer Rolle.

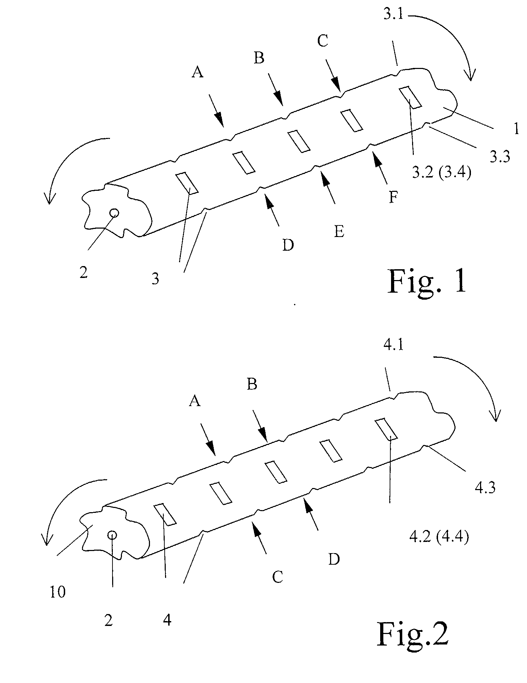

Figur 1 zeigt einen Riemen 1, bestehend aus einem flexiblen Material mit einer Seele 2. Am Umfang des Riemens 1 ist ein Profil 3 eingebracht, das aus mehreren Einzelprofilen 3.1, 3.2, 3.3 und, verdeckt dargestellt, 3.4 besteht. Dabei sind die Einzelprofile 3.1 bis 3.4 zueinander um 90° am Umfang versetzt angebracht, so daß man bei diesem Profil 3 von einer gleichläufigen Profilierung spricht.

In Figur 2 ist ein weitere Variante des Rundriemens 1, der mit 10 bezeichnet ist, dargestellt, der ebenfalls auf der Oberfläche ein Profil, hier ein gegenläufiges Profil 4, aufweist. Die eingebrachten Einzelprofile 4.1 bis 4.4, letzteres verdeckt dargestellt, sind gegenläufig, d.h., um 90° und versetzt zueinander am Umfang verteilt, wobei die Einzelprofile 4.2 und 4.4 sowie die Einzelprofile 4.1 und 4.3 paarweise, jedoch um 180° zueinander versetzt am Umfang angeordnet sind.

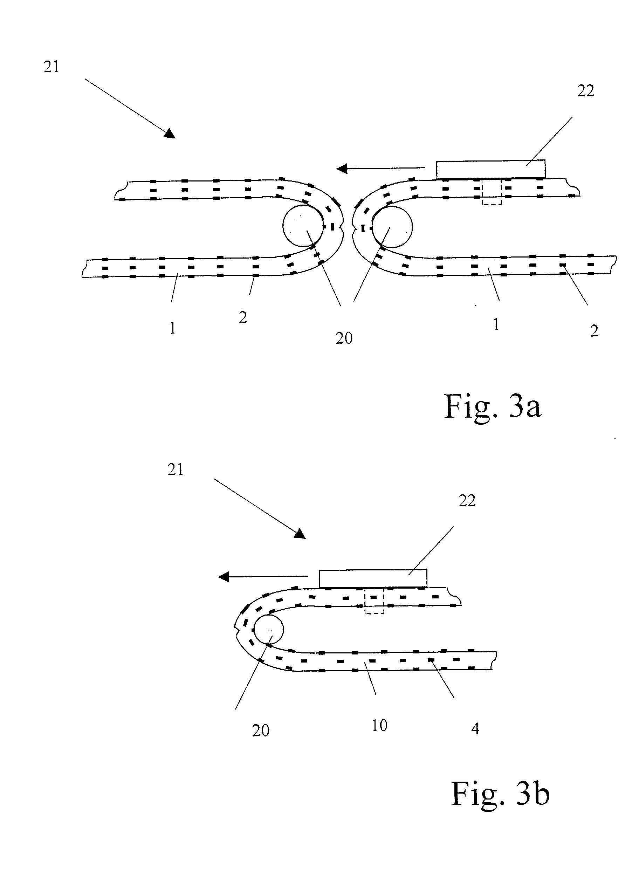

Figur 3 a, b zeigen skizzenhaft die Verwendung der Riemen 1 bzw. 10 an einer Rolle 20 in einem Fördersystem 21.
Beim Einsatz des Riemens 1 werden, wie in Figur 1 bereits dargestellt, in den Bereichen A, B und C die Einzelprofile 3.1 gänzlich und die Einzelprofile 3.2, 3.4 kaum gedehnt, während die den Einzelprofilen 3.3 gegenüberliegenden Einzelprofile 3.3 in den Bereichen D, E und F gestaucht werden, um an der Rolle 20 anzuliegen und über diese beispielsweise angetrieben zu werden. Auf dem Riemen 1 befindet sich angedeutet ein Werkstückträger 22, der mittels Riemen 1 transportiert wird.

Bei Verwendung des Riemens 10 in der Fördereinrichtung 21 nach Figur 3 b wird dieser beim Einspannen, wie mit den äußeren Pfeilen in Figur 2 angedeutet, so beansprucht, daß die Einzelprofile 4.1 in den Bereichen A und B gänzlich gedehnt und die Einzelprofile 4.2, 4.4 teilweise gedehnt und gestaucht werden, während die unteren Einzelprofile 4.3 in den Bereichen C und D nur gestaucht werden.

Bedingt durch die versetzt angeordneten Einzelprofile 4.2 und 4.4 ist der Bereich zwischen A-C und B-D flexibler gehalten, als die Bereiche A-D, B-E und C-F des Riemens 1, so daß die Bildung von kleineren Umschlingungswinkeln gegenüber dem Riemen 1 möglich ist.

Derartige Riemen 1, 10 bilden somit ein Gelenk an den Rollen 20. Es ist wie ein Trockengelenk, das bewegbar ist. Die Anzahl bzw. Häufigkeit der vier Einzelprofile 3.1 bis 3.4 bzw. 4.1 bis 4.4 ergibt sich aus dem gewünschten Flexibilitätsgrad des Riemens 1 bzw. 10 sowie der Funktionsrealisierung des Riemens 1 bzw. 10, der den Werkstückträger 22 lenken und ziehen muß.

Neben dem typischen Rundriemen kann ein derartiges Profil auch auf Flachriemen oder anderen Riemenformen eingebracht werden, um die Flexibilität des Riemens zu erhöhen. Je nach Form ergibt sich die Anzahl der umfänglich eingebrachten Einzelprofile. Es sind dann, beispielsweise beim Flachriemen, nur zwei zueinander am Umfang um 180° versetzte Einzelprofile notwendig. Die Häufigkeit der doppelten Einzelprofile ergibt sich auch hier aus dem gewünschten Flexibilitätsgrad, verbunden mit der Aufgabe des Riemens. Bei einem dreieckigen Führungsriemen kann die Flexibilität des Riemens durch nur ein einziges Einzelprofil am Umfang geschaffen werden.

## Patentansprüche

1. Riemen, bestehend aus einem flexiblen Material, **dadurch gekennzeichnet, daß** am Umfang des Riemens (1, 10) ein Profil (3, 4) eingebracht ist.

2. Riemen nach Anspruch 1, **dadurch gekennzeichnet, daß** das eingebrachte Profil (3) eine gleichläufige Profilierung besitzt.

3. Riemen nach Anspruch 2, **dadurch gekennzeichnet, daß** die gleichläufige Profilierung durch Einzelprofile (3.1 bis 3.4) geschaffen wird, die zueinander um 90° am Umfang versetzt angebracht sind.

4. Riemen nach Anspruch 1, **dadurch gekennzeichnet, daß** das eingebrachte Profil (4) eine gegenläufige Profilierung besitzt.

5. Riemen nach Anspruch 4, **dadurch gekennzeichnet, daß** die gegenläufige Profilierung durch Einzelprofile (4.1 bis 4.4) geschaffen wird, die um 90° und versetzt zueinander am Umfang verteilt sind.

6. Verwendung des Riemens (1, 10) in einem Fördersystem (21).
